# EUROPEAN PATENT APPLICATION

(11) **EP 1 641 202 A2**
(43) Date of publication of application: **29.03.2006**
(21) Application number: 05255783.2
(22) Date of filing: 19.09.2005
(51) Int. Cl.: H04L 12/58

(54) **Platform for intelligent email distribution**

(30) Priority: 17.09.2004 GB 0420684; 06.10.2004 GB 0422145
(71) Applicant: Oostendorp, Jeroen, 7000 AC Doetinchem (NL)
(72) Inventor: Oostendorp, Jeroen, 7000 AC Doetinchem (NL)

(57) **Abstract**

An Email filtering system is disclosed which comprises: a user interface module is mounted on a server and allows access by one or more end-users; a database module containing one or more configuration options relating to the end-users, and which is connected to the interface and allows configuration options to be set and altered by the end-users; a SMTP listener module connected to the database module and to an incoming data stream containing Email messages, and whose behaviour is controlled on an Email by Email basis by the configuration options; a scanning engine module connected to the database module and to the SMTP listener module, so that the configuration options for the end-users modify the scanning engine module behaviour on an Email by Email basis; and a SMTP relay module connected to the database module and to the scanning engine module for SMTP Email delivery to end-user Email. The present invention also comprises a process for filtering Email which involves listening to a data stream comprising SMTP Email messages to detect the Email messages; processing the Email messages according to one or more configuration options specific to one or more end-users stored in a user database; transferring the Email messages to a scanning engine module; scanning the Email messages for the presence of viruses, spam or unwanted content according to the configuration options specific to the end-users; and transferring the Email messages not containing viruses, spam or unwanted content to an SMTP relay module. The invention also comprises a process for modifying the configuration options specific to one or more end-users stored in a user database by displaying to the end-users said one or more configuration options; modifying the configuration options according to the preferences of the end-users; and transmitting the new configuration options to the database.

## Description

### Field of Invention

This invention concerns the operation of a Platform for Intelligent Mail Distribution (PIED) comprising Anti Virus, Anti Spam, Content Filtering, Mail Forwarding Parental Control Management and Content Control Management for Simple Mail Transfer Protocol (SMTP) Email services for digital computers operating with or without connectivity to the general Internet. It is particularly directed to the filtering of Email Data, within set end-user parameters, in network environments encompassing large numbers of Email Addresses of Domains, and Email Domains, an Email Domain being the logical grouping of Email users. Also, it is directed to synchronisation of Email Domain information for authentification and identification of user for the purposes of Security of access to Email, with third party application software for the purpose of transparent software application integration.

### Background of the Invention

Demand for Email Anti Virus, Anti Spam, Content Filtering and Mail Forwarding solutions for corporate users and Internet Service Providers, who in turn offer these services to home and residential users, has been rapidly increasing over the last five years. This is primarily in response to a newer kind of Email virus that gains control of its infected host digital computer and propagates itself further via SMTP Email. In the last 12 months, the MyDoom virus alone generated over 60 million infected SMTP Emails.

Filtering of Email data on entry to a corporate or Internet service provider network can be time and cost intensive in terms of hardware, personnel, and data loss should infection occur. During periods following the release of a new variant of virus, these issues are further exacerbated at the xSP level (an xSP may be, for example) an Internet Service Provider, a Managed Service Provider, or an Application Service Provider) because there are a large number of Email domains to be filtered, and these change on a daily basis (an Email domain being a logical grouping of Email users, such as @HOTMAIL.COM, for example).

Email also exposes family members within a home user environment to content and advertisements, not virus related, that may be unacceptable and inappropriate for their age group. With more than one mailbox being given to the home user as part of their service, specifically to allow family access to Email from a single home digital computer, there are conflicting requirements on the level of filtering required.

Moreover the nature of current anti-virus, anti-spam and Email content filtering solutions for corporate and xSPs allows for limited individual configuration by end-users and limited integration with third party application software.

Currently available Email security and anti-virus solutions are possessed of critical shortcomings; specifically they do not offer:
1) capability for end-users directly to control individual security control over multiple, individual mail boxes within an assigned Email sub-domain.
2) capability for the domain owner on behalf of the Email users within that domain or sub-domains to directly control individual security controls over multiple, individual mail boxes within an assigned Email domain and sub-domain.
3) capability for end-users directly to control individual content filtering control over multiple, individual mailboxes within an assigned Email domain and sub-domain;
4) capability for end-users directly to control individual Spam acceptance or rejection criteria control over multiple, individual mail boxes within an assigned Email domain and sub-domain;
5) capability for integrating fully within an existing secure Email filtered environment by providing direct domain synchronisation services to third party Email filtering solutions; and
6) capability for integrating fully within an existing secure Email filtered environment by providing pre-filtering facilities to third party Email filtering solutions, and subsequent Email redirection or quarantine options.

### Disclosure of Invention

From the foregoing, it may be appreciated that a need has arisen for the ability to place individual restrictions and preferences on mailboxes within domains, and to integrate and synchronise with existing secure Email filtered environments.

In accordance with one embodiment of the present invention, an Email filtering system is disclosed, comprising: a user interface module which is mounted on a server/s and allows access by one or more end-users; a third party automated synchronisation module to change end-user settings on behalf of the end-user/s; a user database module containing one or more configuration options relating to each or any of the end-users, and which is connected to the interface and allows configuration options to be set and altered by the end-users; a SMTP listener module which receives incoming data stream containing Email messages, dependent upon configuration within the user database module, and whose behaviour is controlled on an Email by Email basis by these configuration options in the scanning engine module connected to the user database module, so that the configuration options for the end-users modify the scanning engine module behaviour on an Email by Email basis; and a SMTP relay module connected to the user database module for outgoing SMTP Email delivery to end-user.

The system may additionally comprise a secure quarantine queue for secure holding of intercepted and/or infected mail.

The system may additionally comprise an outbound queue for clean processed mail to be delivered to a remote mail server.

In accordance with a second embodiment of the present invention, a process for filtering Email is disclosed, which involves listening to a data stream comprising SMTP Email messages to detect the Email messages; processing the Email messages according to one or more configuration options specific to one or more end-users stored in a user database; scanning the Email messages for the presence of viruses, spam or unwanted content according to the configuration options specific to the end-users; and transferring the Email messages not containing viruses, spam or unwanted content to an SMTP relay module.

The system may additionally comprise filtering the Email messages for those users that are enabled for the anti virus service, as per the settings of the user database.

This is to filter those Email messages that are not capable of carrying a virus, before the process of scanning the Email messages for the presence of viruses takes place; The system may additionally perform other 'pre filtering' processes.

The process may additionally comprise a method for modifying the configuration options specific to one or more end-users stored in a user database by displaying to the end-users said one or more configuration options; modifying the configuration options according to the preferences of the end-users; and transmitting the new configuration options to the database.

### Brief Description of Drawings

For a more complete explanation of the present invention and the technical advantages thereof, reference is now made to the following description and the accompanying drawing in which:
Figure **1** shows a schematic of the data flows in PIED according to the present invention.
Figure **2** shows a schematic of the data flows in the scanning engine.
Figure **3** shows a schematic of the data flows for PIED implemented at xSP-level.

### Best Mode for Carrying Out the Invention

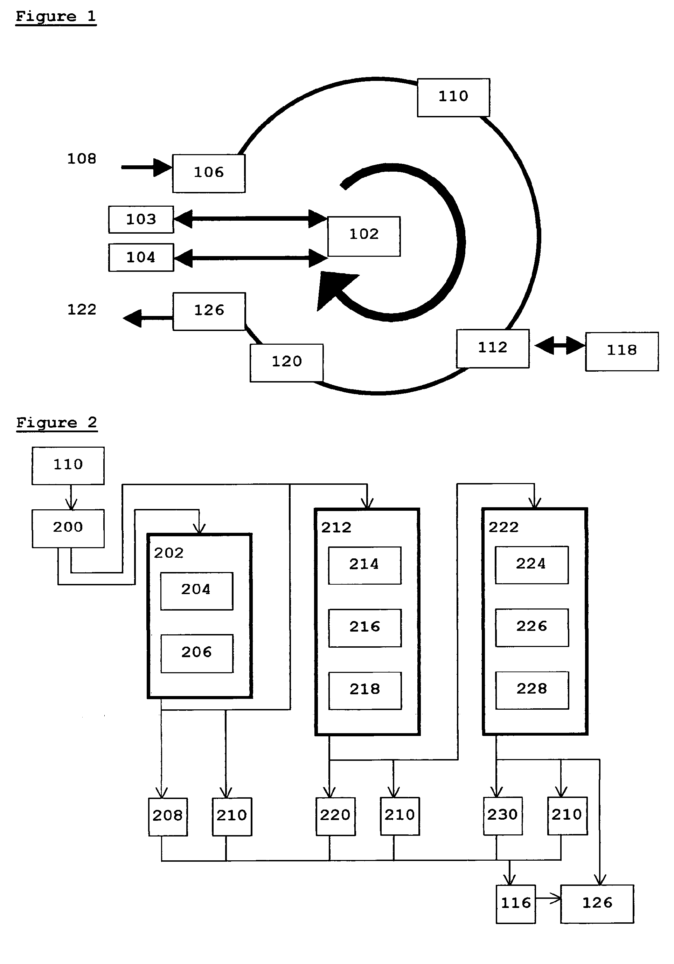

Embodiments of the present invention and their technical advantages may be better understood by referring to Figures **1 - 3.**

The Email filtering system of the present invention comprises a number of 'daemons' or discrete sections with composite functions and scanning engines for dedicated tasks. This application suite will be referred to as the Platform for Intelligent Email Distribution, or PIED, in the following.

Referring now to Figure **1,** which shows a schematic of PIED, SMTP Port listener **106** receives messages from incoming data stream **108** which are processed and passed onto data queue **110** prior to processing by scanning engine **112.** Processed messages are transferred via outbound data queue **120** to relay module **126** for SMTP Email and thence to outgoing data stream **122.**

Preferably, SMTP Port listener **106** is a High Performance SMTP Port listener capable of accepting and acting on externally held data that may modify its behaviour on a mail-by-mail basis. In operation, SMTP listener **106** receives messages from an incoming data stream **108.** Preferably these messages are decoded and unpacked and pass into data queue **110** prior to processing by the scanning engine **112.**

The overall behaviour of PIED on an SMTP mail-by-mail basis is controlled by information contained in a secure data store, or user database **102.** User database **102** is customer-specific and is an information store for end-user data. Its function is to hold information set by the end-user's preference options, and provides configuration for the behaviour of PIED.

Referring again to Figure **1,** end-user preference options may be set via an end-user interface **103,** and an optional set-up process **104.** End-user interface **103** provides access over a corporate network, or the general Internet, for the end-user to set configuration options. In a preferred embodiment, access is via a web site. In a further preferred embodiment, access is via a secure means of communication, preferably involving a Secure Sockets Layer. In a further preferred embodiment, access is via a further protocol from hand held and mobile devices, preferably involving a Secure Communications Protocol. When a new user is added by the customer, set-up process **104** automatically adds default information to **102,** including for example, login and password details, which services within PIED the user is subscribed to, and so on.

The scanning engine **112,** performs anti virus, anti spam, and content control filtering services for inbound SMTP Email and file attachments and also provides further pre-filtering services using third party software solutions and/or services on-server or off-server, with the ability to quarantine any infected Email for virus, or with the ability to process any Email to pre determined parameters. For example the Email may be checked for the presence of a virus, so that Email messages that cannot contain a virus are not processed further. In this context, "pre-filtering" is defined as the capability to exclude or reroute Email traffic either detected as unwanted by the database engine **102** or by third party services.

Scanning engine **112** is connected with a single Master server which feeds all mail servers for all services, configured updates by the Author, not the end-user. The scanning engine **112** also receives updates of anti virus signatures and the like, via proprietary or third party update service **118.**

Referring now to Figure **2,** which shows a schematic of scanning engine **112,** data from queue **110** passes through a pre-filtering engine **200,** and, depending on the action of the pre-filtering engine 200 may subsequently pass through one or more of the following: an anti virus engine **202,** an anti spam filtering engine **212,** and a content-filtering engine **222.** Filtered messages are passed either to quarantine (**208, 220,** or **230**), or waste bin **210,** and acceptable messages passed on to **126.**

Pre-filtering engine **200** can if required provide redirection to third party software solutions and/or services on- or off-server, or the built-in capabilities afforded by **102.** This typically operates using a defined rule set to determine the status of the Email, for example i, the probable infection status of inbound SMTP Email to the antivirus engine, or third party antivirus scanning engine within **112;** for example ii, content control settings of Email to an individual user to the content control engine; for example iii, age control settings of Email to an individual user to the content control engine.

Anti virus engine **202,** used either stand alone, or using unique synchronisation technology to integrate third party anti virus software solutions, provides Email and file attachment antivirus filtering for SMTP Email. Information regarding the filtering options performed on SMTP Email is provided by Application Programming Interface access to the user database. Protection against viruses may typically be provided by Known Virus Protection **204,** for example by examining signatures and detecting known viruses by name, and/or Outbreak Virus Detection **206,** for example by heuristic analysis to proactively stop new viruses. When a virus is detected it can be moved to quarantine **208** or a waste bin **210.**

Anti spam filtering engine **212,** which uses heuristics and Bayesian model methodologies combined with individual word probabilities. The antispam Engine, used either stand alone, or using unique synchronisation technology to integrate third party antispam software solutions, provides Email and file attachment user level preference spam filtering for SMTP Email. Information regarding the filtering options performed on SMTP Email is provided by Application Programming Interface access to the user database. Typically it provides a Message Structure Analysis **214** that analyses, for example, the structure of a message, its reputation and travel path, performs heuristic rule-based checks **216** by checking against a knowledge base and heuristic and/or Bayesian content analysis, and is able to detect hoaxes and phishing, and uses White and Black Lists of global, domain and user lists **218** based on list entries. Messages are allowed or blocked based on sender, domain, hosts, etc. Detected spam is moved to quarantine **220** for further predetermined action or routing of mail depending on the content of the mail, or a it is passed to waste bin **210,** or the subject line of the message is changed and the message allowed through.

Content-filtering engine **222** integrated with the external database enables individual mailbox preferences for content Filtering. It typically provides Mail Server Protection **224** that detects and stops oversized attachments, mailbombs, etc, an Attachment Type Control List **226** that blocks selectable file types such as .mp3, video and executables, a Custom Rules Control **228** which uses custom rules to block specific subjects, message content or file names. Detected content mail is moved to quarantine **230** or a waste bin **210,** or the subject line of the message is changed and the message allowed through.

The scanning engine **112** is preferably able to place undesired messages in quarantine queues **208, 220,** and **230** and the software suite allows for a secure folder structure for the placement of quarantined SMTP Email. If required, the system may provide an alert to the user, the sender, or the systems administrator, (for example if the content is considered as not being acceptable or is inappropriate) via alert service **116.** This alert is passed to an outbound queue **126.**

Associated with the operation of the scanning engine, is a reporting mechanism **123** (not shown), which provides a summary by end-user as defined in **102** of, for example, quarantined and/or deleted Email. All reports, notifications and clean messages go via **126** and **120** to the customers mail server.

A virus in quarantine queue **208** may be released or deleted according to user level or domain level protocols.

Spam in quarantine queue **220** may be released or deleted according to user level or domain level protocols; in addition, when releasing quarantined messages a user can select to remember a particular message as being not spam. Any further similar message would be recognised by **212** to not be spam.

Mail of having content that is considered as not being acceptable or is inappropriate, or which has special characteristics specified in **102,** may be released, forwarded, modified or deleted from quarantine queue **230** according to user level or domain level protocols; in addition notification can be made to an administrator or user.

Referring again to Figure **1,** a high performance relay module **126** for SMTP Email enables delivery to end-user Email systems or third party application software on completion of antivirus, anti-spam, and content filtering checking. Relay module **126** transmits filtered Emails not quarantined or deleted to an outgoing data stream **122.** Optionally, a standard or customizable banner **124** may be added to the Email (not shown). Clean processed Email is passed to an outbound queue **126** to enable delivery of SMTP Email data. In a preferred embodiment PIED additionally comprise an outbound queue for clean processed mail **120.** Should mail not be delivered, it is retained in **120,** and stored or forwarded for a defined period of time.

Each stage of the process requires information from **102** to determine the action the mail is to be subjected to.

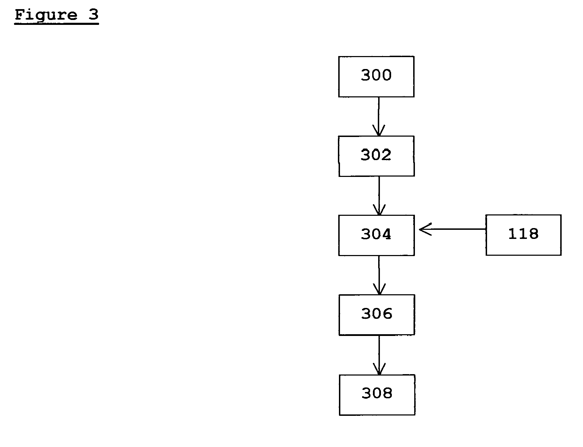

A preferred embodiment of the present invention where the customer is an internet service provider (xSP) may be understood by reference to Figure **3,** which shows a schematic of data flows during Email processing. When an xSP subscribes to the PIED service, information on DNS server **302** concerning the xSP's mail server, for example MX records, is altered so that incoming mail from a message sender **300** is sent to PIED **304,** mounted on a third-party service provider. Scanning engine **112** processes each Email in data queue **110** according to the data in **102** as described in the foregoing. If the message has not been passed to **208, 210, 220,** or **230,** then it is sent to the xSP mail server **306,** and thence to end-user mailbox **308.** Such an externally-mounted PIED system is able to process Email data from multiple xSPs; in each case an xSP's DNS records are adjusted so that all Email for its customers is diverted to PIED **304,** processed, and sent to each xSP's mail server as appropriate. Each xSP will have multiple end-users; many, if not most of these will be grouped into specific domains and sub-domains, allowing a domain, or sub-domain, administrator to set default settings for the end-users within their respective domains or sub-domains. This is achieved via set-up process **104** mounted on the xSP's server, so that, for example, when a new user subscribes to the xSP, automatic synchronization from the xSP to PIED could instantly add a new user or domain to the PIED user database **102.** As soon as the user is added, the user may login to PIED through the interface **103** running from the PIED service mounted on a third party server. **103** has a separate sign-in and logon to authenticate users, and allows them to set their own settings at a Service Providers view (for some or all) or at the end-user view for personal settings.

In a further preferred embodiment, a user interface **105** (not shown) allows end-users to modify their settings and preferences, and operates in a manner substantially identical to **103,** as described above. However, according to this embodiment **105** connects to, and interchanges data with, **104,** and both **104** and **105** are mounted on the xSP's server. This end-user information held on **104** is synchronised as appropriate with the user database **102.** Thus when a new user subscribes to a Service Provider, automatic synchronization from the Service Provider to PIED could instantly add a new user or domain to the PIED user database (configuration database). As soon as the user is added, the user could login through the web interface **103** as described above. Synchronisation between information held by the xSP on **104** and the end-user database **102** on the PIED service mounted on a third party server may happen at a frequency set by the needs of the xSP. Access to **105** may be via a corporate network, or the general Internet, and allows the xSP to set configuration options on individual mailboxes within an assigned Email Domain or sub Domain, on behalf of the end-users. In a preferred embodiment, access is via a web site. In a further preferred embodiment, access is via a secure means of communication, preferably involving a Secure Sockets Layer. In a further preferred embodiment, access is via a further protocol from hand held and mobile devices, preferably involving a Secure Communications Protocol.

A key aspect of PIED is that only one update of Master server **118** with information about spam, worms, viruses errant scripts and the like is required, thereby reducing the volume of update traffic from an end-user's computer to antivirus, antispam, etc, and ensuring that these security measures are implemented across a user network regardless of the habits of the end-user.

These modules within the suite, according to the invention allow,
1) End-users to directly apply individual security control over multiple, and/or individual mail boxes within an assigned Email domain and sub-domain by accepting configuration from the web interface as described, and referencing that information on an individual Email basis for processing.
2) End-users to directly control individual content filtering control over multiple, and/or individual mailboxes within an assigned Email domain and sub-domain. Using the scanning engine, with end-user configuration supplied via the user database from the web interface, individual content rules are applied on a mail-by-mail basis. Differing content rules can be applied to each SMTP mailbox within an assigned Email domain and sub domain.
3) End-users to directly control individual Spam acceptance or rejection criteria control over multiple, and/or individual mail boxes within an assigned Email domains and sub-domain. Using the scanning engine, with end-user configuration supplied via the user database from the web interface, individual spam acceptance or rejection criteria rules are applied on a mail by mail basis. Differing Spam acceptance or rejection criteria rules can be applied to each SMTP mailbox within an assigned Email domain and sub domain.
4) Super-users or administrators can control the entire domain for all end-user mail boxes, or to groups of end-users according to business function or seniority.
5) Capability for integrating fully within an existing secure Email filtered environment by providing pre-filtering facilities to third party Email filtering solutions, and subsequent Email redirection or quarantine options. The pre-filter module allows pre-filtering capabilities and redirection via the clean relay agent to either the end-user Email system, existing third party software or managed service solutions for anti virus services, or to quarantine for infected Email.

Although the above specification contains many specificities, these should not be construed as limiting the scope of the invention but as merely providing illustrations of some of the presently preferred embodiments of this invention.

## Claims

1. An Email filtering system **characterised in that** a database module (102) containing one or more configuration options relating to one or more end-users, and a scanning engine module (112) connected to said database module (102) wherein said one or more configuration options for said one or more end-users modify the scanning engine module (112) behaviour on an Email by Email basis.

2. An Email pre-filtering engine (200) **characterised in that** a probable status of an Email prior to further analysis by further engines is determined by a defined rule set, wherein said further engines are at least one of: an antivirus filter module (202), an anti-spam filter module (212) and a content control filtering module (222), and wherein if said probable status is good said Email is not subject to further analysis.

3. The Email filtering system of claim 1 further **characterised in that** said scanning engine module (112) comprises at least one of: the pre-filtering engine of claim 2 (200), an antivirus filter module (202), an anti-spam filter module (212) and a content control filtering module (222) .

4. The Email filtering system of claim 2 additionally comprising a quarantine queue (208, 220, 230) for secure holding of mail for each of said at least one of: said antivirus filter module (202), said anti-spam filter module (212) and said content control filtering module (222).

5. The email system according to claim 3 further **characterised in that** said at least one of: an antivirus filter module (202), an anti-spam filter module (212) and a content control filtering module (222) are updated from a master server (118).

6. The Email filtering system of claim 1 additionally comprising a user interface module (103) which allows access by said one or more end-users whereby said one or more configuration options may be set and altered by said one or more end-users.

7. The email filtering system of claim 1 additionally comprising a SMTP listener module (106) connected to said database module (102) and to an incoming data stream (108), said incoming data stream comprising Email messages, whereby said one or more configuration options for said one or more end-users modify the SMTP listener module (106) behaviour on a Email by Email basis.

8. The email filtering system of claim 1 additionally comprising a SMTP relay module (126) connected to said database module (102) and to said scanning engine module (112) for SMTP Email delivery to end-user Email, whereby filtered Emails are transmitted to an outgoing data stream (122).

9. The Email filtering system of claim 1 additionally comprises a set-up process (104), enabling a third party user database to be synchronised as appropriate with the user database (102).

10. A process for filtering Email comprising:
a. listening to a data stream (108) comprising SMTP Email messages and detecting said Email messages;
b. filtering said Email messages using the email filtering system of claim 1;
c. transferring Email messages not containing viruses, spam or unwanted content to an SMTP relay module (126);
whereby filtered emails are returned to said data stream.
